# FASCICULE DE BREVET EUROPEEN

(11) **EP 2 782 794 B1**
(45) Date de publication et mention de la délivrance du brevet: **21.09.2016**
(21) Numéro de dépôt: 12781379.8
(22) Date de dépôt: 09.10.2012
(51) Int. Cl.: B60R 21/02

(54) **SYSTEME D'ARRET DE CHARGE POUR VEHICULE AUTOMOBILE**
GEPÄCKSICHERUNGSSYSTEM FÜR EIN KRAFTFAHRZEUG
LUGGAGE RETENTION SYSTEM FOR A VEHICLE

(30) Priorité: 22.11.2011 FR 1160633
(43) Date de publication de la demande: 01.10.2014
(73) Titulaire: Peugeot Citroën Automobiles SA, 78140 Vélizy Villacoublay (FR)
(72) Inventeur: BENANE, Said, F-94550 Chevilly Larue (FR); DESPLANCHES, Patrice, F-78100 Saint Germain En Laye (FR)
(74) Mandataire: Fosse, Danièle
(86) Numéro de dépôt international: PCT/FR2012/052290
(87) Numéro de publication internationale: WO 2013/076391

(56) Documents cités:
- WO-A1-96/06756
- WO-A1-2011/114879
- CN-Y- 201 347 012
- FR-A1- 2 792 894
- FR-A1- 2 878 209
- JP-A- 2000 185 600

## Description

La présente invention est relative à un système d'arrêt de charge pour véhicule automobile.

Plus particulièrement, l'invention concerne un système d'arrêt de charge, comprenant une traverse longiligne d'arrêt de charge adaptée à s'étendre transversalement dans le véhicule entre deux structures latérales de caisse du véhicule de manière à être située à l'arrière d'une rangée d'au moins un dossier de siège et à l'avant d'un compartiment à bagages du véhicule.

Le document CN201347012Y divulgue un exemple d'un tel système d'arrêt de charge. Dans ce système, la traverse est une tôle pliée dont les deux extrémités sont attachées rigidement à des structures latérales situées au dessus d'un passage de roue. La traverse est elle-même de type rigide.

Le document JP 2000-185600 décrit un dispositif de protection sous forme d'un filet qui s'étend au-dessus des sièges, entre ceux-ci et le plafond du véhicule et empêche ainsi des charges de passer au-dessus des sièges vers le compartiment passager. Les caractéristiques de la préambule de la revendication 1 sont connues de ce document.

Un problème de dimensionnement des structures latérales se pose pour qu'elles puissent résister à la sollicitation engendrée par la traverse retenant une charge en cas de choc frontal du véhicule sur un obstacle. Ces structures doivent être dimensionnées de manière à être suffisamment résistantes. Ces structures ne doivent pas pour autant être trop lourdes afin de ne pas trop pénaliser le coût du véhicule comme ses performances par exemple en ce qui concerne la consommation de carburant.

La présente invention a notamment pour but de remédier aux inconvénients de l'art antérieur et d'améliorer les solutions existantes.

A cet effet, l'invention a pour objet un système d'arrêt de charge pour véhicule automobile, comprenant une traverse longiligne d'arrêt de charge adaptée à s'étendre transversalement dans le véhicule entre deux structures latérales de caisse du véhicule de manière à être située à l'arrière d'une rangée d'au moins un dossier de siège et à l'avant d'un compartiment à bagages du véhicule. Un dispositif de fixation et d'absorption d'énergie par déformation programmée est aménagé à chacune des extrémités de la traverse pour la fixation latérale de la traverse à ladite structure latérale correspondante du véhicule et pour se déformer sous l'action d'une sollicitation déterminée, cette sollicitation étant prévue pour être représentative de la sollicitation d'une charge située dans le compartiment à bagages et tendant à pousser la traverse lors d'un choc de type frontal du véhicule contre un obstacle.

Selon l'invention,
- le dispositif de fixation et d'absorption d'énergie comporte d'une part une zone rigide de fixation, pour la liaison à la structure latérale correspondante de la caisse du véhicule, et d'autre part, adjacente à ladite zone de fixation, une zone d'absorption d'énergie par déformation; et
- le dispositif de fixation et d'absorption d'énergie comporte une interface de renfort d'appui de dossier qui est rapportée à la traverse en ayant une zone de raccordement fixée à l'extrémité libre correspondante de la traverse, qui a sa zone rigide de fixation distante de la zone de raccordement à la traverse et qui a sa zone d'absorption d'énergie située entre ladite zone de raccordement et ladite zone rigide de fixation.

Dans divers modes de réalisation du système d'arrêt de charge selon l'invention, en peut éventuellement avoir recours en outre à l'une et/ou à l'autre des dispositions suivantes:
- chaque interface de renfort comporte un pan avant et un pan latéral qui sont sensiblement perpendiculaires et sont pourvus chacun d'un point de fixation pour que, au coin de ces pans, la fixation à ces points soit rigide ;
- chaque extrémité libre de la traverse comporte un tronçon terminal de fixation solidaire de l'interface de renfort correspondante et un tronçon terminal d'absorption d'énergie par déformation qui est adjacent au tronçon terminal de fixation ;
- le tronçon terminal d'absorption d'énergie par déformation comporte une patte déformable reliée au repos à l'interface de renfort et déformée à distance de l'interface de renfort quand elle est activée à déformation d'absorption d'énergie lors du choc frontal avec poussée de la charge du compartiment à bagages ;
- la traverse est effilée à ses extrémités ;
- le dispositif de fixation et d'absorption d'énergie par déformation programmée comporte une jambe supérieure déformable de reprise d'effort à proximité de chacune des extrémités de la traverse, pour relier la traverse et un bâti de tablette arrière reliant les structures latérales en étant situé au dessus de la traverse.

Par ailleurs, l'invention a également pour objet un sous-ensemble de véhicule comportant deux structures latérales de caisse du véhicule, délimitant partiellement un compartiment à bagages et une traverse longiligne d'arrêt de charge s'étendant transversalement dans le véhicule entre lesdites structures latérales, en étant située à l'arrière d'une rangée d'au moins un dossier de siège et à l'avant du compartiment à bagages. Ce sous-ensemble comporte un système d'arrêt de charge selon l'invention dont le dispositif de fixation et d'absorption d'énergie par déformation programmée à chacune des extrémités de la traverse peut se déformer sous l'action d'une sollicitation déterminée qui est prévue pour être représentative de la sollicitation d'une charge située dans le compartiment à bagages et tendant à pousser la traverse lors d'un choc de type frontal du véhicule contre un obstacle.

Dans un mode de réalisation de ce sous-ensemble, chaque structure latérale de caisse du véhicule comporte une doublure se passage de roue sur le côté correspondant du compartiment à bagages. Le système d'arrêt de charge est pourvu de sa zone rigide de fixation et de sa zone d'absorption d'énergie par déformation, en ayant chaque interface de renfort qui présente une aile raccordée à la zone d'absorption d'énergie, au contact de la doublure se passage de roue et libre de fixation relativement à cette doublure.

Dans un mode de réalisation du sous-ensemble, un bâti de tablette arrière relie les deux structures latérales de caisse du véhicule au dessus du compartiment à bagages. Le système d'arrêt de charge est pourvu de sa jambe supérieure déformable de reprise d'effort qui relie la traverse et le bâti de tablette arrière.

Dans un mode de réalisation du sous-ensemble, un support d'appui de dossier est solidaire de chaque structure latérale de caisse du véhicule et est fixée au dispositif de fixation et d'absorption d'énergie par déformation programmée du système d'arrêt de charge.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en deux dimensions de la partie arrière de la caisse d'un véhicule, cette vue étant prise à partir de l'habitacle et montrant un système d'arrêt de charge selon l'invention et la caisse du véhicule autour de son compartiment à bagages ;
- la figure 2 est une vue en perspective de trois quarts avant, montrant partiellement et en éclaté le système d'arrêt de charge selon l'invention ;
- la figure 3 est une vue en perspective de trois quarts avant, montrant le système d'arrêt de charge selon l'invention avec ses parties représentées à la figure 2 qui sont assemblées ;
- la figure 4 est une vue en perspective de trois quarts avant, montrant avec plus de détail qu'à la figure 3 certaines parties du système d'arrêt de charge ;
- la figure 5 est une vue en perspective de trois quarts arrière, montrant partiellement et en éclaté le système d'arrêt de charge selon l'invention ;
- la figure 6 est une vue en perspective de trois quarts arrière, montrant le système d'arrêt de charge selon l'invention avec ses parties représentées à la figure 5 qui sont assemblées ;
- la figure 7 est une vue conforme à la figure 4, mais montrant certaines des parties du système d'arrêt de charge telles que déformées après heurt par une charge du compartiment à bagage lors d'un choc de type frontal.

Sur les différentes figures, les mêmes références désignent des éléments identiques ou similaires.

Dans la description qui va suivre, la direction désignée comme longitudinale correspond à l'axe d'avancement d'un véhicule qui sert ici de référentiel.

En se reportant aux figures, la caisse 10 d'un véhicule selon l'invention a sa partie arrière, autour d'un compartiment à bagages 12, qui est équipée d'un système d'arrêt de charge 14 selon l'invention.

L'expression compartiment à bagages sera employée ici pour tout compartiment arrière pouvant constituer un compartiment de chargement destiné à stocker des objets à transporter dans le véhicule, à l'arrière d'une rangée de siège, typiquement une banquette arrière de véhicule.

Cette partie arrière de la caisse comporte essentiellement un plancher 18, un bâti de tablette arrière 22 et, dans des structures latérales 16 de caisse du véhicule, deux montants latéraux 24 d'arrière d'encadrement de porte arrière associés à des doublures de passage de roue 26. Le bâti de tablette arrière 22, en limite supérieure du compartiment à bagages 12, relie les structures latérales 16 au dessus des doublures de passage de roue 26 qui déterminent les limites latérales dudit compartiment.

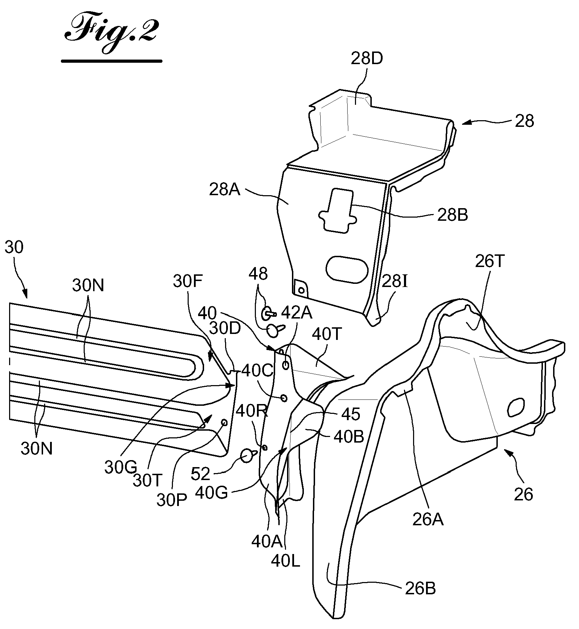

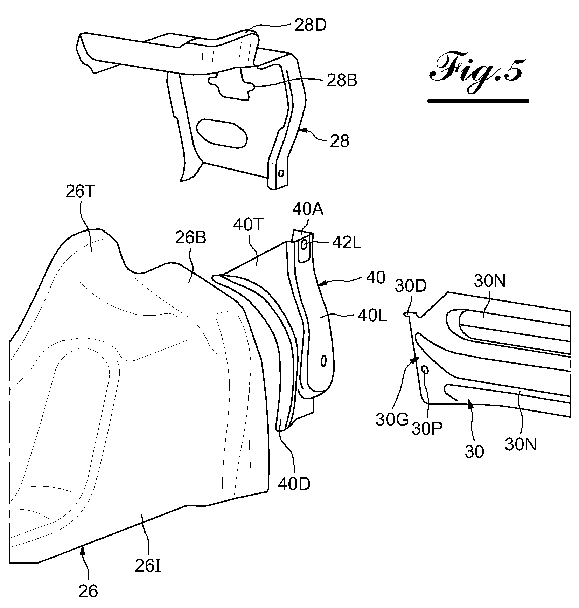

Chacune des doublures de passage de roue 26 comporte en particulier (figure 2 et figure 5) un bombé avant 26B et un bombé de tête d'amortisseur 26T. Le bombé avant 26B est adjacent à la face arrière du dossier de siège, ici le dossier de la banquette.

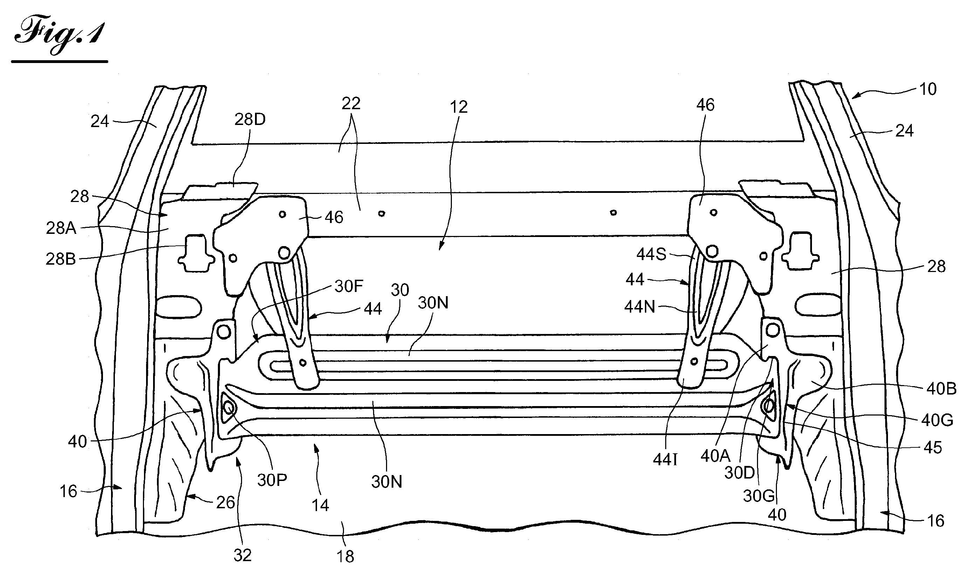

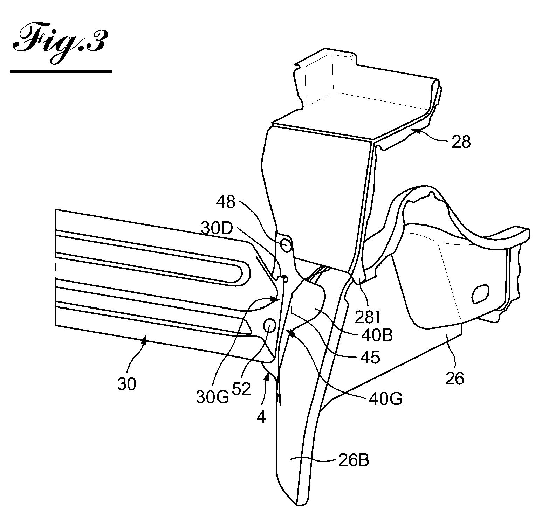

En outre, la partie arrière de la caisse 10 comporte une pièce appelée appui de dossier 28 comportant un panneau avant 28A déterminant un orifice 28B de passage d'accroche supérieure de dossier (figure 1), un plateau intermédiaire 28C (figure 2) et un panneau vertical arrière 28D qui est assemblé au bâti de tablette arrière 22 par exemple par soudage. Le panneau avant 28A est disposé parallèlement à la face arrière du dossier de siège et a une languette inférieure 281 qui est soudée (figure 3) à un rebord latéral 26L de la doublure 26 de passage de roue correspondante.

Le système d'arrêt de charge 14 comporte une traverse longiligne 30 d'arrêt de charge, dont les extrémités sont reliées aux structures latérales 16.

La traverse 30 s'étend transversalement dans le véhicule entre les deux structures latérales 16 de la caisse 10 en étant située à l'avant d'un compartiment à bagages du véhicule 12 à l'arrière d'une rangée d'au moins un dossier de siège. La figure 1 ne représente pas de dossier de siège pour éviter de cacher le système d'arrêt de charge.

Dans le mode de réalisation représenté, la traverse 30 s'étend sensiblement à mi-hauteur du compartiment à bagages 12 en faisant par exemple une vingtaine de centimètres de hauteur. La traverse 30 comporte sur sensiblement toute sa longueur des nervures de renfort 30N à section triangulaire et dont la profondeur décroit vers les extrémités. La traverse 30 à sa face avant qui s'étend sensiblement parallèlement au dossier de banquette et les nervures de renfort 30N font saillie vers le compartiment à bagages.

En outre, la traverse 30 est effilée à ses extrémités, sur un tronçon effilé 30F qui a sa hauteur diminuant progressivement. Cette diminution est essentiellement sur le haut de la traverse.

Le système d'arrêt de charge 14 comporte un dispositif 32 de fixation et d'absorption d'énergie par déformation programmée, prévu à chacune des extrémités de la traverse 30.

Chaque dispositif 32 est destiné d'une part à assurer la fixation latérale de la traverse relativement à la structure latérale 16 correspondante du véhicule et d'autre part à pouvoir se déformer pour protéger les occupants de l'habitacle du véhicule par rapport à l'intrusion d'une charge présente dans le compartiment à bagage, en évitant la déformation trop importante du dossier lors d'un choc de type frontal du véhicule contre un obstacle.

Chaque dispositif 32 peut se déformer sous l'action d'une sollicitation déterminée qui est représentative de la sollicitation d'une charge située dans le compartiment à bagages, tendant à se déplacer et à heurter violemment la traverse lors dudit choc frontal. Une telle charge occupant le compartiment à bagages est typiquement de 18 kilogrammes, en étant utilisée dans le cadre de tests de chocs normalisés. Le critère de réussite d'un test est l'absence de rupture du système et la préservation suffisante du dossier de siège.

Les dispositifs 32 de fixation et d'absorption d'énergie permettent globalement de protéger les occupants de l'habitacle et d'éviter la sollicitation des structures latérales 16 et du plancher 18 lors d'un accident de type choc frontal quand le compartiment à bagages est chargé.

De manière générale, chaque dispositif 32 de fixation et d'absorption d'énergie comporte d'une part une zone de fixation, pour la liaison des extrémités de la traverse 30 à la structure latérale 16 correspondante de la caisse 10, et d'autre part, adjacente à la zone de fixation, une zone d'absorption d'énergie par déformation.

Dans chaque dispositif de fixation et d'absorption d'énergie 32, le bas du tronçon effilé 30F présente à l'extrémité libre de la traverse 30 un perçage 30P pour le passage d'une vis. Ce perçage de raccordement 30P est déterminé dans un court tronçon terminal de fixation 30T. Autour de ce tronçon 30T, la nervure de renfort 30N du bas de la traverse est recourbée en divergeant au fur et à mesure de la décroissance de sa profondeur et du rapprochement dudit perçage.

La traverse comporte aussi un tronçon terminal d'absorption d'énergie 30G par déformation qui est adjacent au tronçon terminal de fixation 30T. Le tronçon terminal d'absorption d'énergie 30G comporte une patte déformable 30D, dressée vers le haut du tronçon effilé 30F et à son extrémité libre.

Outre les aménagements prévus sur la traverse 30, chaque dispositif de fixation et d'absorption d'énergie 32 comporte une pièce appelée interface de renfort d'appui de dossier qui est référencée 40 aux figures. Cette interface de renfort 40 est rapportée à la traverse 30, en étant d'une part interposée entre l'extrémité correspondante de cette traverse et la pièce d'appui de dossier 28 correspondante et d'autre part au contact du bombé avant 26B de la doublure de passage de roue 26 correspondante.

Chaque dispositif de fixation et d'absorption d'énergie 32 comporte aussi une jambe supérieure déformable de reprise d'effort 44 pour relier la traverse 30 et le bâti de tablette arrière 22. Cette liaison entre ladite jambe 44 et ledit bâti 22 est effectuée par l'intermédiaire d'une plaque supérieure de reprise d'effort 46.

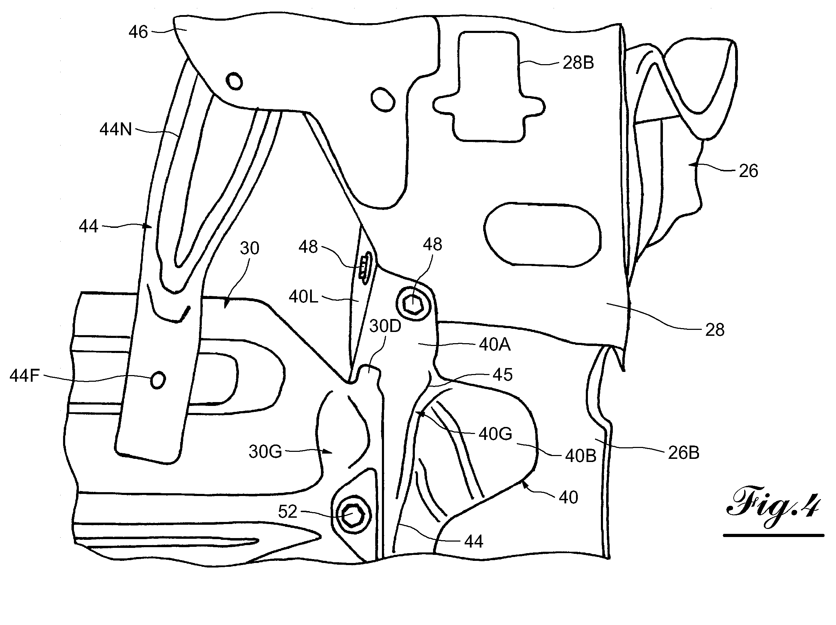

La plaque de reprise d'effort 46, visible à la figure 1 et partiellement à la figure 4, est une tôle d'acier fixée par exemple par vissage à l'extrémité supérieure 44S de la jambe supérieure déformable de reprise d'effort 44, à l'avant du bâti de tablette arrière 22 et à moitié de la hauteur de l'appui de dossier 28, à proximité de l'orifice 28B de passage d'accroche supérieure de dossier.

La jambe supérieure déformable de reprise d'effort 44 est aussi conformée dans une tôle d'acier fixée à son extrémité inférieure 441 à la traverse 30, à proximité du bout de la nervure de renfort 30N du haut de la traverse. Cette fixation est également effectuée par vissage, mais elle peut être effectuée par tout autre moyen équivalent. La jambe supérieure déformable 44 comporte des nervures de renfort 44N, s'étendant de bas en haut tout en étant au dessus de la traverse 30. Ainsi, une flexion locale de ladite jambe 44 est autorisée avec absorption d'énergie quand le haut de l'extrémité correspondante de la traverse 30 se déforme lors du choc, comme il sera expliqué plus en détail ultérieurement.

L'interface de renfort 40 comporte un pan avant 40A et un pan latéral 40L qui sont sensiblement perpendiculaires et sont pourvus chacun d'un point de fixation à l'appui de dossier 28, ces points de fixation étant respectivement référencés 42A et 42L à la figure 2 et à la figure 5. Ainsi, l'interface de renfort 40 est en cornière pour être rigide à sa zone de fixation ayant lesdits points de fixation pour servir à sa liaison avec la caisse 10.

Le pan avant 40A délimite aussi un orifice d'accrochage 40C, au tiers supérieur de sa hauteur, pour coopérer par engagement avec la patte déformable 30D de la traverse 30. Le pan avant 40A délimite également un orifice de raccordement 40R, au tiers inférieur de sa hauteur, pour la fixation de raccordement avec l'extrémité correspondante de la traverse 30 par son perçage de raccordement 30P. Ainsi, le bas du pan avant 40A définit une zone de raccordement fixée à l'extrémité libre correspondante de la traverse.

L'interface de renfort 40 comporte une aile bombée 40B s'étendant dans le prolongement du pan avant 40A, sensiblement sur le tiers médian de sa hauteur et à l'opposé du pan latéral 40L. Cette aile bombée 40B est conformée pour correspondre par complémentarité de forme avec le haut du bombé avant 26B de la doublure de passage de roue 26 correspondante.

Au raccordement du pan avant 40A et de l'aile bombée 40B, l'interface de renfort 40 comporte une zone de pliage 40G symbolisée par des traits de pliage référencés 45 à la figure 1, à la figure 2, à la figure 3 et à la figure 4. A ces figures, l'interface de renfort 40 n'est pas déformée, elle est en configuration normale de repos. La zone de pliage 40G détermine ainsi, pour l'interface de renfort 40, sa zone d'absorption d'énergie qui est située entre sa zone latérale de fixation présentant les points de fixations et sa zone de raccordement à la traverse présentant l'orifice de raccordement 40R.

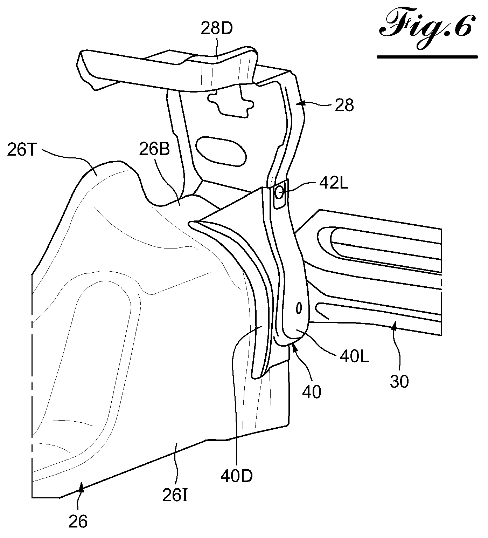

L'interface de renfort 40 comporte un pan de retour arrière 40T dont le rebord arrière 40D est conformé pour correspondre par complémentarité de forme avec la face intérieure 261 de la doublure de passage de roue 26 correspondante, à son raccordement au bombé avant 26B comme illustré à la figure 5 et à la figure 6.

Le montage du système d'arrêt de charge ressort déjà en partie de la description qui précède et va maintenant être détaillé.

La caisse 10 a ses structures latérales 16 reliées ente elles par le plancher 18 et le bâti de tablette arrière 22. De chaque côté de la caisse 10, à proximité des montants latéraux 24 d'arrière d'encadrement de porte arrière, l'appui de dossier 28 est assemblé audit bâti 22 et, par sa languette inférieure 281, au rebord latéral 26A de la doublure de passage de roue 26. La plaque supérieure de reprise d'effort 46 raccorde aussi l'appui de dossier 28 au bâti de tablette arrière 22.

Le haut de chaque interface de renfort 40 est fixé par deux vis 48 au coin inférieur correspondant de l'appui de dossier 28, par les points de fixations référencés 42A et 42L. Cette fixation est effectuée sur une zone de fixation qui est rigide car la tôle pliée est résistante à proximité du coin de raccordement du pan avant 40A et du pan latéral 40L qui sont perpendiculaires.

L'aile bombée 40B de chaque interface de renfort 40 est au contact du haut du bombé avant 26B de la doublure de passage de roue 26. Ce contact ne constitue pas une liaison rigide mais permet un appui lors de la déformation de l'interface de renfort.

A chaque extrémité libre de la traverse 30, le tronçon terminal 30T de fixation est solidaire du bas du pan avant 40A de l'interface de renfort 40, par vissage d'une vis 52 traversant l'orifice de raccordement 40R et le perçage de raccordement 30P. Cette liaison est également relativement rigide du fait qu'elle est proche du coin de raccordement du pan avant 40A et du pan latéral 40L.

Egalement à chaque extrémité libre de la traverse 30, la patte déformable 30D est accrochée à l'interface de renfort 40 en étant repliée sur le bord de l'orifice d'accrochage 40C du pan avant 40A. Cette liaison est par contre à déformation programmée suivant la résistance à l'arrachement de la patte déformable 30D relativement au bord de l'orifice d'accrochage 40C. Le tronçon d'absorption d'énergie 30G de la traverse 30 fait donc bien partie avec la patte déformable 30D de la zone d'absorption d'énergie définie de manière globale dans le dispositif 32.

Chaque jambe supérieure déformable de reprise d'effort 44 relie la traverse 30 et le bâti de tablette arrière 22, via la plaque supérieure de reprise d'effort 46.

Le fonctionnement du système d'arrêt de charge ressort déjà en partie de la description qui précède et va maintenant être détaillé.

En cas de choc de type choc frontal du véhicule dans un obstacle, quand une charge est située dans le compartiment à bagages du véhicule, cette charge pousse longitudinalement la traverse 30 et tend à la déformer de l'arrière vers l'avant, en poussant aussi le dossier de la banquette.

La traverse 30 à tendance à tourner autour d'un axe horizontal passant par ses tronçons terminaux de fixation 30T, sensiblement par les perçages de raccordement 30P vissés par les vis 52 aux interfaces de renfort 40.

La patte déformable 30D reste d'abord à sa configuration normale de repos dans laquelle elle tire sur le rebord de l'orifice 40C puis elle se décroche dudit rebord en passant à une configuration déformée du fait de la torsion appliquée au tronçon terminal de fixation 30T. La patte déformable 30D est déformée en se positionnant à distance de l'interface de renfort 40 quand elle est activée à déformation d'absorption d'énergie lors du choc frontal avec poussée de la charge du compartiment à bagages.

Une configuration déformée de travail est également occupée par la zone de pliage 40G. En effet, cette zone 40G subit d'une part la torsion appliquée par la traverse 30 et d'autre part une contre réaction venant de l'aile bombée 40B qui est en appui sur le bombé avant 26B le la structure latérale 16 de la caisse. L'aile bombée 40B est libre de fixation relativement au bombé avant 26B de la structure latérale.

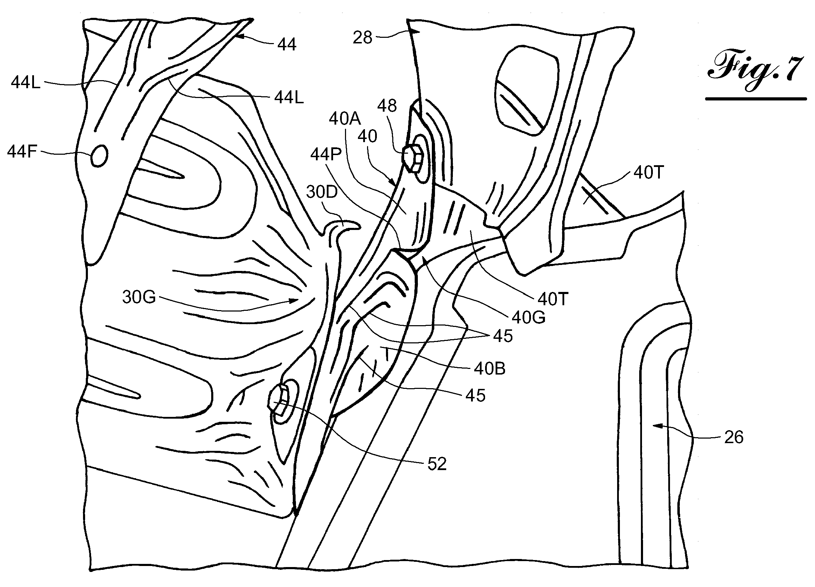

La figure 7 représente bien le pli 40P résultant du travail de déformation à absorption d'énergie sur la zone de pliage 40G de l'interface de renfort 40.

Chaque jambe supérieure déformable 44 fléchit localement quand le haut de l'extrémité correspondante de la traverse 30 se déforme lors du choc. Cette flexion est située à la base des nervures de renfort 44N de la jambe 44, au dessus de son point inférieur de fixation 44F avec la traverse. Cette flexion locale est symbolisée à la figure 7 par des lignes de flexion référencés 44L.

Avantageusement, la conformation de la traverse 30 à extrémités effilées et tronçon d'absorption d'énergie 30G à patte déformable 30D, tout comme la zone de pliage 40G de l'interface de renfort 40 et la jambe déformable 44, permettent au système d'arrêt de charge de disposer globalement d'une zone d'absorption d'énergie par déformation dans chacun des dispositifs 32 de fixation et d'absorption d'énergie. Ces dispositifs présentent chacun également une zone de fixation à pluralité de points de fixation rigides. Ces fixations rigides à la structure latérale 16 correspondante de la caisse 10, ainsi que les déformations programmées, permettent à la caisse de ne pas être renforcée aux alentours du système d'arrêt de charge, sans pour autant être détériorée lors d'un choc frontal faisant intervenir ce système. L'appui de dossier 28 peut aussi demeurer intact. S'il venait à être dégradé, il ne s'agit pas d'une pièce trop difficile à remplacer comme pourrait l'être la doublure de passage de roue 26 ou le bâti de tablette arrière 22. Cette remarque sur la facilité de remplacement est aussi valable pour la plaque supérieure 46 de reprise d'effort.

La caisse 10 n'est donc pas alourdie car il n'est pas nécessaire d'utiliser des tôles épaisses. Les réparations du véhicule suite à un choc frontal sont réduites puisque seul le remplacement du système d'arrêt de charge est nécessaire.

Ainsi, avantageusement, l'absorption d'énergie par déformation programmée dans le système d'arrêt de charge permet d'éviter une sollicitation pénalisante de la traverse et des structures latérales. Elle permet aussi d'autoriser de telles structures et une traverse allégée.

L'invention n'est pas limitée au mode de réalisation décrit. Par exemple, la forme de l'interface de renfort 40 peut être adaptée à la forme de la caisse autour du compartiment à bagages. De même, les fixations par vissage décrites précédemment peuvent être remplacées en variante par tout autre moyen équivalent de fixation tel que des points de soudure ou des rivets par exemple.

En outre, dans le mode de réalisation décrit en relation avec les figures, chaque dispositif de fixation et d'absorption d'énergie 32 est scindé en plusieurs pièces pouvant se déformer localement de manière prévisible et qui sont reliées entre elles par des zones rigides de fixation entre les portions déformables desdites pièces. La fixation de la traverse à la caisse est étagée sur les différentes pièces. L'absorption d'énergie par déformation est également étagée sur les différentes pièces, à savoir sur les extrémités libres de la traverse 30, les zones de pliage 40G de chaque interface de renfort 40, mais aussi les lignes de flexion 44L de chaque jambe supérieure 44 de reprise d'effort. En variante non représentée, une unique pièce en tôle conformée de manière appropriée, le cas échéant à pluralité d'espaces de déformations pour absorber de l'énergie, remplace la pluralité de pièces comprenant la traverse, l'interface de renfort d'appui de dossier et la jambe supérieure de reprise d'effort.

## Revendications

1. Système d'arrêt de charge pour véhicule automobile, comprenant une traverse longiligne d'arrêt de charge (30) adaptée à s'étendre transversalement dans le véhicule entre deux structures latérales (16) de caisse (10) du véhicule de manière à être située à l'arrière d'une rangée d'au moins un dossier de siège et à l'avant d'un compartiment à bagages (12) du véhicule, un dispositif de fixation et d'absorption d'énergie (32) par déformation programmée étant aménagé à chacune des extrémités de la traverse (30) pour la fixation latérale de la traverse à ladite structure latérale (16) correspondante du véhicule et pour se déformer sous l'action d'une sollicitation déterminée, prévue pour être représentative de la sollicitation d'une charge située dans le compartiment à bagages et tendant à pousser la traverse lors d'un choc de type frontal du véhicule contre un obstacle, ce dispositif (32) comportant d'une part une zone rigide de fixation (42A, 42L), pour la liaison à la structure latérale (16) correspondante de la caisse du véhicule, et d'autre part, adjacente à ladite zone de fixation, une zone d'absorption d'énergie par déformation (40G), **caractérisé en ce que** le dispositif de fixation et d'absorption d'énergie (32) comporte une interface de renfort d'appui de dossier (40) qui est rapportée à la traverse (30) en ayant une zone de raccordement (40R) fixée à l'extrémité libre correspondante (30T, 30P) de la traverse, qui a sa zone rigide de fixation (42A, 42L) distante de la zone de raccordement (40R) à la traverse et qui a sa zone d'absorption d'énergie (40G) située entre ladite zone de raccordement (40R) et ladite zone rigide de fixation (42A, 42L).

2. Système selon la revendication 1, dans lequel chaque interface de renfort (40) comporte un pan avant (40A) et un pan latéral (40L) qui sont sensiblement perpendiculaires et sont pourvus chacun d'un point de fixation (42A, 42L) pour que, au coin de ces pans, la fixation à ces points soit rigide.

3. Système selon l'une quelconque des revendications 1 à 2, dans lequel chaque extrémité libre de la traverse (30) comporte un tronçon terminal de fixation (30T) solidaire de l'interface de renfort correspondante (40) et un tronçon terminal d'absorption d'énergie par déformation (30G) qui est adjacent au tronçon terminal de fixation.

4. Système selon la revendication précédente, dans lequel le tronçon terminal d'absorption d'énergie par déformation (30G) comporte une patte déformable (30D) reliée au repos à l'interface de renfort (40) et déformée à distance de l'interface de renfort quand elle est activée à déformation d'absorption d'énergie lors du choc frontal avec poussée de la charge du compartiment à bagages.

5. Système selon l'une quelconque des revendications précédentes, dans lequel la traverse (30) est effilée à ses extrémités.

6. Système selon l'une quelconque des revendications précédentes, dans lequel le dispositif de fixation et d'absorption d'énergie (32) par déformation programmée comporte une jambe supérieure déformable de reprise d'effort (44) à proximité de chacune des extrémités de la traverse (30), pour relier la traverse et un bâti de tablette arrière (22) reliant les structures latérales (16) en étant situé au dessus de la traverse.

7. Sous-ensemble de véhicule comportant deux structures latérales (16) de caisse (10) du véhicule, délimitant partiellement un compartiment à bagages (12) et une traverse longiligne d'arrêt de charge (30) s'étendant transversalement dans le véhicule entre lesdites structures latérales, en étant située à l'arrière d'une rangée d'au moins un dossier de siège et à l'avant du compartiment à bagages, **caractérisé en ce qu'**il comporte un système d'arrêt de charge (14) selon l'une quelconque des revendications précédentes dont le dispositif de fixation et d'absorption d'énergie (32) par déformation programmée à chacune des extrémités de la traverse (30) peut se déformer sous l'action d'une sollicitation déterminée qui est prévue pour être représentative de la sollicitation d'une charge située dans le compartiment à bagages et tendant à pousser la traverse lors d'un choc de type frontal du véhicule contre un obstacle.

8. Sous-ensemble selon la revendication précédente, dans lequel d'une part chaque structure latérale (16) de caisse (10) du véhicule comporte une doublure se passage de roue (26) sur le côté correspondant du compartiment à bagages (12) et d'autre part le système d'arrêt de charge (14) est conforme à la revendication 2 en ayant chaque interface de renfort (40) qui présente une aile (40B) raccordée à la zone d'absorption d'énergie (40G), au contact de la doublure se passage de roue (26) et libre de fixation relativement à cette doublure.

9. Sous-ensemble selon l'une quelconque des revendications 7 à 8, dans lequel d'une part un bâti de tablette arrière (22) relie les deux structures latérales (16) de caisse (10) du véhicule au dessus du compartiment à bagages (12) et d'autre part le système d'arrêt de charge (14) est conforme à la revendication 8 en ayant sa jambe supérieure déformable de reprise d'effort (44) qui relie la traverse (30) et le bâti de tablette arrière (22).

10. Sous-ensemble selon l'une quelconque des revendications 7 à 9, dans lequel un support d'appui de dossier (28) est solidaire de chaque structure latérale (16) de caisse (10) du véhicule et est fixée au dispositif de fixation et d'absorption d'énergie (32) par déformation programmée du système d'arrêt de charge.

## Patentansprüche

1. Gepäcksicherungssystem für ein Kraftfahrzeug, umfassend einen länglichen Gepäcksicherungsquerträger (30), dafür ausgelegt, sich im Kraftfahrzeug längsverschieblich zwischen zwei Seitenstrukturen (16) der Karosserie (10) des Kraftfahrzeugs so zu erstrecken, dass er sich an der Rückseite einer Reihe mindestens einer Sitzrückenlehne und an der Vorderseite eines Kofferraums (12) des Kraftfahrzeugs befindet, wobei eine Befestigungs- und Energieabsorptionsvorrichtung (32) durch programmierte Verformung an jedem Ende des Querträgers (30) für die seitliche Befestigung des Querträgers an der besagten entsprechenden Seitenstruktur (16) des Kraftfahrzeugs angeordnet ist, und um sich unter Einfluss einer bestimmten Belastung zu verformen, dafür vorgesehen, repräsentativ für die Belastung einer sich im Kofferraum befindenden Ladung zu sein und dazu tendiert, den Querträger bei einem frontalen Aufprall des Kraftfahrzeugs gegen ein Hindernis zu schieben, wobei diese Vorrichtung (32) zum einen, einen starren Befestigungsbereich (42A, 42L) umfasst, zur Verbindung an die entsprechende Seitenstruktur (16) der Kraftfahrzeugkarosserie, und zum anderen, angrenzend zum besagten Befestigungsbereich, einen durch Verformung (40G) erzeugten Energieabsorptionsbereich, **dadurch gekennzeichnet, dass** die Befestigungs- und Energieabsorptionsvorrichtung (32) eine die Rückenlehne (40) stützende Verstärkungsschnittstelle aufweist, die sich auf den Querträger (30) bezieht, einen Anschlussbereich (40R) aufweisend, der am entsprechenden freien Ende (30T, 30P) des Querträgers befestigt ist, dessen starrer Befestigungsbereich (42A, 42L) vom Anschlussbereich (40R) zum Querträger entfernt ist und dessen Energieabsorptionsbereich (40G) sich zwischen dem besagten Anschlussbereich (40R) und dem besagten starren Befestigungsbereich (42A, 42L) befindet.

2. System nach Anspruch 1, wobei jede Verstärkungsschnittstelle (40) einen vorderen Teil (40A) und einen seitlichen Teil (40L) aufweist, die im Wesentlichen senkrecht verlaufen und jeweils mit einem Befestigungspunkt (42A, 42L) versehen sind, damit, an den Ecken dieser Teile, die Befestigung an diesen Punkten starr ist.

3. System nach einem der Ansprüche 1 bis 2, wobei jedes freie Ende des Querträgers (30) einen mit der entsprechenden Verstärkungsschnittstelle (40) verbundenen Endabschnitt der Befestigung (30T) und einen zum Endabschnitt der Befestigung angrenzenden Endabschnitt der Energieabsorption durch Verformung (30G) aufweist.

4. System nach dem vorhergehenden Anspruch, wobei der Endabschnitt der Energieabsorption durch Verformung (30G) eine verformbare Lasche (30D) aufweist, die in Ruhestellung mit der Verstärkungsschnittstelle (40) verbunden ist und im Abstand zur Verstärkungsschnittstelle verformt wird, wenn sie zur Verformung der Energieabsorption bei einem frontalen Aufprall durch die Schubkraft der Ladung im Kofferraum aktiviert wird.

5. System nach einem der vorhergehenden Ansprüche, wobei der Querträger (30) an seinen Enden konisch zulaufend ist.

6. System nach einem der vorhergehenden Ansprüche, wobei die Befestigungs- und Energieabsorptionsvorrichtung (32) durch programmierte Verformung einen verformbaren oberen Schenkel zur Kraftaufnahme (44) in der Nähe jeden Endes des Querträgers (30) aufweist, zur Verbindung des Querträgers und eines hinteren Traggestells (22), der die Seitenstrukturen (16) verbindet und über dem Querträger angeordnet ist.

7. Baugruppe für ein Kraftfahrzeug, umfassend zwei Seitenstrukturen (16) der Karosserie (10) des Kraftfahrzeugs, teilweise begrenzend einen Kofferraum (12) und einen sich im Kraftfahrzeug zwischen den besagten Seitenstrukturen längsverschieblich erstreckenden Gepäcksicherungsquerträger (30), angeordnet an der Rückseite einer Reihe mindestens einer Sitzrückenlehne und an der Vorderseite eines Kofferraums, **dadurch gekennzeichnet, dass** sie ein Gepäcksicherungssystem (14) nach einem der vorhergehenden Ansprüche aufweist, wobei sich die Befestigungs- und Energieabsorptionsvorrichtung (32) durch programmierte Verformung an jedem Ende des Querträgers (30) unter der Einwirkung einer bestimmten Belastung verformen kann, die dafür vorgesehen ist, repräsentativ für die Belastung einer sich im Kofferraum befindenden Ladung zu sein und dazu tendiert, den Querträger bei einem frontalen Aufprall des Kraftfahrzeugs gegen ein Hindernis zu schieben.

8. Baugruppe nach dem vorhergehenden Anspruch, wobei zum einen jede Seitenstruktur (16) der Karosserie (10) des Kraftfahrzeugs eine Radhausauskleidung (26) auf der entsprechenden Seite des Kofferraums (12) aufweist und zum anderen das Gepäcksicherungssystem (14) gemäß Anspruch 2 jeweils eine Verstärkungsschnittstelle (40) aufweist, die einen Flügel (40B) aufweist, der an den Energieabsorptionsbereich (40G) angeschlossen ist, im Kontakt mit der Radhausauskleidung (26) und frei von der Befestigung bezüglich dieser Auskleidung.

9. Baugruppe nach einem der Ansprüche 7 bis 8, wobei zum einen ein hinteres Traggestell (22) die zwei Seitenstrukturen (16) der Karosserie (10) des Kraftfahrzeugs über dem Kofferraum (12) verbindet und zum anderen das Gepäcksicherungssystem (14) gemäß Anspruch 8 seinen oberen verformbaren Schenkel zur Kraftaufnahme (44) aufweist, der den Querträger (30) und das hintere Traggestell (22) verbindet.

10. Baugruppe nach einem der Ansprüche 7 bis 9, wobei ein Stützträger der Rückenlehne (28) mit jeder Seitenstruktur (16) der Karosserie (10) des Kraftfahrzeugs verbunden und an der Befestigungs- und Energieabsorptionsvorrichtung (32) durch programmierte Verformung des Gepäcksicherungssystems befestigt ist.

## Claims

1. Load-stopping system for a motor vehicle, comprising a slender load-stopping cross-member (30) suitable for extending transversely in the vehicle between two lateral structures (16) of the vehicle body (10) so as to be situated behind a row of at least one seat backrest and in front of a luggage compartment (12) of the vehicle, a fixing device (32) for absorbing energy by programmed deformation being provided at each of the ends of the cross-member (30) for lateral fixing of the cross-member to said corresponding lateral structure (16) of the vehicle and to deform under the action of a given force, designed to be representative of the force of a load situated in the luggage compartment intending to push the cross-member during an impact of the frontal type of the vehicle against an obstacle, this device (32) comprising firstly a rigid fixing zone (42A, 42L) for connection to the corresponding lateral structure (16) of the vehicle body, and secondly, adjacent to said fixing zone, a zone for absorbing energy by deformation (40G), **characterised in that** the fixing and energy absorption device (32) comprises a backrest abutment reinforcement interface (40) that is attached to the cross-member (30) while having a connection zone (40R) fixed to the corresponding free end (30T, 30P) of the cross-member, which has its rigid fixing zone (42A, 42L) distant from the zone (40R) for connection to the cross-member and has its energy-absorption zone (40G) situated between said connection zone (40R) and said rigid fixing zone (42A, 42L).

2. System according to claim 1, in which each reinforcement interface (40) comprises a front surface (40A) and a lateral surface (40L) that are substantially perpendicular and are each provided with a fixing point (42A, 42L) so that, at the corner of these surfaces, the fixing at these points is rigid.

3. System according to either one of claims 1 and 2, in which each free end of the cross-member (30) comprises an end fixing portion (30T) secured to the corresponding reinforcement interface (40) and an end portion (30G) for absorbing energy by deformation that is adjacent to the end fixing portion.

4. System according to the preceding claim, in which the end portion (30G) for absorbing energy by deformation comprises a deformable lug (30D) connected at rest to the reinforcement interface (40) and deformed at a distance from the reinforcement interface when it is activated for energy-absorption deformation during the frontal impact with thrust from the load in the baggage compartment.

5. System according to any of the preceding claims, in which the cross-member (30) is tapered at its ends.

6. System according to any of the preceding claims, in which the fixing device (32) for absorption of energy by programmed deformation comprises a deformable top force-absorbing leg (44) in the vicinity of each of the ends of the cross-member (30) for connecting the cross-member and a rear shelf frame (22) connecting the lateral structures (16) while being situated above the cross-member.

7. Vehicle sub-assembly comprising two lateral structures (16) of the vehicle body (10), partially delimiting a luggage compartment (12) and a slender load-stopping cross-member (30) extending transversely in the vehicle between said lateral structures, while being situated behind a row of at least one seat backrest and in front of the luggage compartment, **characterised in that** it comprises a load-stopping system (14) according to any of the preceding claims, wherein the fixing device (32) for energy absorption by the programmed deformation at each of the ends of the cross-member (30) can deform under the action of a given force that is designed to be representative of the force of a load situated in the luggage compartment intended to push the cross-member during an impact of the frontal type of the vehicle against an obstacle.

8. Subassembly according to the preceding claim, in which firstly each lateral structure (16) of the vehicle body (10) comprises a wheel-arch lining (26) on the corresponding side of the luggage compartment (12) and secondly the load-stopping system (14) is in accordance with claim 2 while having each reinforcement interface (40) having a flange (40B) connected to the energy-absorption zone (40G), in contact with the wheel-arch lining (26) and freely fixed relative to this lining.

9. Subassembly according to either one of claims 7 and 8, in which firstly a rear shelf frame (22) connects the two lateral structures (16) of the vehicle body (10) above the luggage compartment (12) and secondly the load-stopping system (14) is in accordance with claim 8 while having its deformable top force-absorbing leg (44) connecting the cross-member (30) and the rear shelf frame (22).

10. Subassembly according to any of claims 7 to 9, in which a backrest abutment support (28) is secured to each lateral structure (16) of the vehicle body (10) and is fixed to the fixing device (32) for absorbing energy by programmed deformation of the load-stopping system.
